# EUROPEAN PATENT SPECIFICATION

(11) **EP 2 049 588 B1**
(45) Date of publication and mention of the grant of the patent: **13.10.2010**
(21) Application number: 07799803.7
(22) Date of filing: 25.07.2007
(51) Int. Cl.: C08L 23/06, C08K 5/00, C08K 5/13, C08L 71/00

(54) **HIGH-DENSITY POLYETHYLENE COMPOSITIONS, METHOD OF PRODUCING THE SAME, ARTICLES MADE THEREFROM, AND METHOD OF MAKING SUCH ARTICLES**
HOCHDICHTE POLYETHYLENZUSAMMENSETZUNGEN, VERFAHREN ZU DEREN HERSTELLUNG, DARAUS HERGESTELLTE ARTIKEL UND VERFAHREN ZUR HERSTELLUNG DERARTIGER ARTIKEL
COMPOSITIONS DE POLYÉTHYLÈNE HAUTE DENSITÉ, PROCÉDÉ DE PRODUCTION DE CELLES-CI, ARTICLES PRÉPARÉS Á PARTIR DE CELLES-CI, ET PROCÉDÉ DE PRÉPARATION DE TELS ARTICLES

(30) Priority: 02.08.2006 US 834956 P
(43) Date of publication of application: 22.04.2009
(73) Proprietor: DOW GLOBAL TECHNOLOGIES INC., Midland, MI 48674 (US)
(72) Inventor: COSTOLNICK, Nancy, Houston, TX 77019 (US); HO, Thoi, H., Lake Jackson, TX 77566 (US); NYLIN, Kevin, Red Deer, Alberta, T4R 2H9 (CA); WRIGHT, Dale, Charleston, WV 25304-2331 (US)
(74) Representative: Böhm, Brigitte
(86) International application number: PCT/US2007/074339
(87) International publication number: WO 2008/016815

(56) References cited:
- WO-A-2006/065651
- WO-A-2007/106417
- JP-A- 5 186 636
- US-A- 5 378 747
- US-A1- 2005 173 819

## Description

### Field of Invention

The instant invention relates to a high-density polyethylene composition, method of producing the same, articles made therefrom, and method of making such articles.

### Background of the Invention

Polyolefin based resins are used in a wide variety of applications. Such resins are commonly formulated with various additives, for example, UV-stabilizers and antioxidants, in order to protect the resins from degradation. In many of these applications, it is desirable that the resins remain substantially clear. In some situations, it has been observed that some of the commonly used additives lead to increased color (or decreased clarity) of the resins. Discoloration is a complex phenomenon, and appears to depend on many factors, including catalyst residues, vinyl end groups, and antioxidants.

Yellowness Index test, according to ASTM D-6290, may be employed to determine the clarity of polyolefin based-resins. In general, a Yellowness Index of -3 is considered desirable. Furthermore, it is generally known that that Yellowness Index increases upon storage and exposure to increased temperatures. Accordingly, methods for improving the clarity of such polyolefin-based resins, and maintaining such improvement over time, as evidenced by a reduced Yellowness Index, are desired.

US 5,378,747 discloses an ethylene homopolymer composition or ethylene copolymer composition, comprising (a) bis-(2,4-di-tert-butylphenyl)pentaerythritol diphosphite in an amount that is from about 0.0001 to less than 0.30 weight perecnt, and (b) at least one color stabilization compound selected from the group consisting of a carboxylic acid compound, an alcohol compound and a hydroxycarboxylic acid compound in an amount from about 0.0001 to about 1 weight perecnt, wherein said weight percents are based on the weight of said ethylene polymer composition.

WO 2006/065651 A2 relates to rheology modified relatively high melt strength polyethylene compositions, which compositions comprise a low-molecular weight ethylene polymer component and a high-molecular weight ethylene polymer component coupled with at least one polysulfonyl azide. The rheology modified polyethylene compositions are obtained by reacting a first composition comprising the low-molecular weight polyethylene component and the high-molecular weight polyethylene component with a second composition comprising a coupling amount of the at least one polysulfonyl azide.

Despite the research efforts in developing and improving the clarity of polyolefin-based resins, there is still a need for a polyolefin-based resin having improved clarity, as evidenced by a reduced Yellowness Index. Furthermore, there is still a need for a method for producing a polyolefin-based resin having improved clarity, as evidenced by a reduced Yellowness Index.

### Summary of the Invention

The instant invention is a high-density polyethylene composition, method of producing the same, articles made therefrom, and method of making such articles. The high-density polyethylene composition according to instant invention comprises a melt-blended reaction product consisting of a first component, a second component, and a third component. The first component is a high-density polyethylene polymer having a density in the range of 0.950 to 0.970 g/cm³. The second component is polyethylene glycol, and the third component is liquid octadecyl 3-(3,5-di-tert-butyl-4-hydroxyphenyl)propionate. The high-density polyethylene composition of the instant invention has a Yellowness Index of less than about -2.5 at 0 hour of accelerated aging at 100 °C. according to ASTM D-6290. The process for producing the high-density polyethylene composition according to instant invention includes the following steps: (1) providing a first component, wherein the first component is a high-density polyethylene polymer having a density in the range of 0.950 to 0.970 g/cm³; (2) providing a second component, wherein the second component is polyethylene glycol; (3) providing a third component, wherein the third component is liquid octadecyl 3-(3,5-di-tert-butyl-4-hydroxyphenyl)propionate; (4) blending the second and third components into the first component thereby forming a blend; (5) pelletizing the blend; and (6) thereby forming pellets of the high-density polyethylene composition having a Yellowness Index of less than about -2.5 at 0 hour of accelerated aging at 100°C. according to ASTM D-6290. Articles according to instant invention comprises the above-described inventive high-density polyethylene composition.

In another embodiment, the instant invention provides an article and a method of making an article, in accordance with any of the preceding embodiments, except that the article being a compression molded article, injection molded article, or an injection blow molded article.

### Brief Description of the Drawings

For the purpose of illustrating the instant invention, there is shown in the drawings a form that is presently preferred; it being understood, however, that this invention is not limited to the precise arrangements and instrumentalities shown.
**Fig. 1** is a block diagram illustrating the manufacturing process of the high-density polyethylene composition of the instant invention; and
**Fig. 2** is a graph illustrating the relationship between Yellowness Index and accelerated aging at 100 °C.

### Detailed Description of the Invention

The instant invention is a high-density polyethylene composition, method of making the same, articles made therefrom, and method of making such articles. The high-density polyethylene composition according to instant invention includes a first component, a second component, and a third component. The first component is a high-density polyethylene polymer having a density in the range of 0.940 to 0.980 g/cm³. The second component is polyethylene glycol, and the third component is octadecyl 3-(3,5-di-tert-butyl-4-hydroxyphenyl)propionate. The high-density polyethylene composition of the instant invention has a Yellowness Index of less than about -2.5 at 0 hour of accelerated aging at 100 °C. according to ASTM D-6290. The process for making the high-density polyethylene composition according to instant invention includes the following steps: (1) providing a first component, wherein the first component is a high-density polyethylene polymer having a density in the range of 0.940 to 0.980 g/cm³; (2) providing a second component, wherein the second component is polyethylene glycol; (3) providing a third component, wherein the third component is octadecyl 3-(3,5-di-tert-butyl-4-hydroxyphenyl)propionate; (4) blending the second and third components into the first component thereby forming a blend; (5) pelletizing the blend; and (6) thereby forming pellets of the high-density polyethylene composition having a Yellowness Index of less than about -2.5 at 0 hour of accelerated aging at 100 °C. according to ASTM D-6290.

The term "polymer" is used herein to indicate a homopolymer, an interpolymer or copolymer, or a terpolymer. The term "polymer," as used herein, also includes interpolymers or copolymers, such as, for example, those made via polymerization of ethylene in the presence of one or more C₃-C₂₀ alpha-olefin(s).

The term "interpolymer," as used herein, refers to polymers prepared by the polymerization of at least two different types of monomers. The generic term interpolymer thus includes copolymers, usually employed to refer to polymers prepared from two different types of monomers, and polymers prepared from more than two different types of monomers.

The first component may be any polymer; for example, a polyolefin. Exemplary polyolefins include, but are not limited to, polyethylene, polypropylene, polyisobutylene, polybutadiene, polyisoprene, cyclopentene, and norbornene. The first component may preferably be an ethylene polymer. Exemplary ethylene polymers include, but are not limited to, high-density polyethylene (HDPE), low-density polyethylene (LDPE), linear low-density polyethylene (LLDPE), homogeneously branched linear or substantially linear low-density polyethylene, and heterogeneously branched linear low-density polyethylene. First component may, for example, be a high-density polyethylene. The first component may have any density; for example, the first component has a density in the range of 0.940 to 0.980 g/cm³. All individual values and subranges from 0.940 to 0.980 g/cm³ are included herein and disclosed herein; for example, density can be from a lower limit of 0.941 g/cm³, 0.943 g/cm³, 0.951 g/cm³, 0.953 g/cm³, 0.961 g/cm³, or 0.971 g/cm³ to an upper limit of 0.951 g/cm³, 0.953 g/cm³, 0.961 g/cm³, 0.963 g/cm³, or 0.973 g/cm³. For example, the first component may have a density in the range of 0.950 to 0.970 g/cm³, or in the alternative, the first component has a density in the range of 0.950 to 0.965 g/cm³. The first component may have any melt index (I₂₁); for example, the first component may have a melt index (I₂) in the range of 0.5 to 1000 g/10 minutes. All individual values and subranges from 0.5 to 1000 g/10 minutes are included herein and disclosed herein; for example, the melt index (I₂) can be from a lower limit of 0.5 g/10 minutes, 1 g/10 minutes, or 5 g/10 minutes to an upper limit of 150 g/10 minutes, 200 g/10 minutes, 300 g/10 minutes, or 400 g/10 minutes. For example, the first component may have a melt index (I₂) in the range of 5 to 150 g/10 minutes; or in the alternative, the first component may have a melt index (I₂) in the range of 10 to 150 g/10 minutes. The first component may include any amount of one or more alpha-olefin comonomers; for example, the first component may comprises about less than 10 percent by weight units derived from one or more alpha-olefin comonomers, based on the weight of the first component. All individual values and subranges less than 10 weight percent are included herein and disclosed herein. The first component may include any amount of units derived from ethylene; for example, the first component may comprise at least about 90 percent by weight of units derived from ethylene, based on the weight of the first component. All individual values and subranges above 90 weight percent are included herein and disclosed herein.

Suitable comonomers useful for polymerizing with ethylene or another base monomer include, but are not limited to, ethylenically unsaturated monomers, conjugated or nonconjugated dienes and polyenes. Examples of such comonomers include, but are not limited to, the C₃-C₂₀ α-olefin comonomers such as propylene, isobutylene, 1-butene, 1-hexene, 4-methyl-1-pentene, 1-heptene, 1-octene, 1-nonene, 1-decene. Preferred comonomers include propylene, 1-butene, 1- hexene, 4-methyl-1-pentene and 1-octene, with 1-hexene being especially preferred. Other suitable monomers include styrene, halo- or-alkyl-substituted styrenes, tetrafluoroethylenes, vinylbenzocyclobutanes, butadienes, isoprenes, pentadienes, hexadienes, octadienes and cycloalkenes, for example, cyclopentene, cyclohexene and cyclooctene. Typically, ethylene is copolymerized with one or more C₃-C₂₀ α-olefins. The high-density polyethylene is a copolymer in which ethylene is polymerized in the presence of one or more C₃-C₂₀ α-olefin comonomers.

The second component may preferably be any polyethylene glycol. For example, the second component is alpha-hydro-omega-hydroxypoly(oxy-1,2-ethanediyl). The second component may, for example, have the following formula:

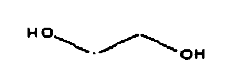

The high-density polyethylene composition comprises 150 to 1000 parts of the second component per one million parts of the first component by weight. All individual values and subranges from 150 to 1000 parts of the second component per one million parts of the first component by weight are included herein and disclosed herein; for example, the high-density polyethylene composition comprises 150 to 200 parts of the second component per one million parts of the first component by weight. Such polyethylene glycols are commercially available under the tradename Carbowax^{™} 400, CAS No.: 25322-62-3, from The Dow^{™} Chemical Company, MI, USA.

The third component is liquid octadecyl 3-(3,5-di-tert-butyl-4-hydroxyphenyl)propionate having the following formula:

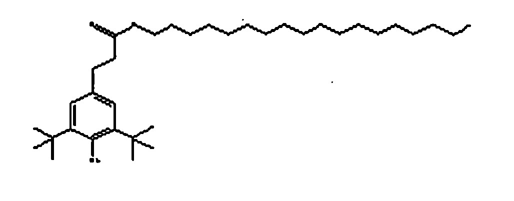

The high-density polyethylene composition comprises about less than 1000 parts of the third component per one million parts of the first component by wieght. All individual values and subranges less than 1000 parts of the third component per one million parts of the first component are included herein and disclosed herein; for example, the high-density polyethylene composition comprises less than 650 parts of the third component per one million parts of the first component by weight; or in the alternative, the high-density polyethylene composition comprises less than 500 parts of the third component per one million parts of the first component by weight; or in the alternative, the high-density polyethylene composition comprises less than 100 parts of the third component per one million parts of the first component by weight. Such antioxidants are commercially available under the tradename Irganox^{™} 1076, CAS No.: 2082-79-3, from Ciba^{™} Specialty Chemical Corp., NY, USA.

The high-density polyethylene composition may further include additional components such as other polymers, or additives. Such additives include, but are not limited to, antistatic agents, color enhancers, dyes, lubricants, fillers, pigments, primary antioxidants, secondary antioxidants, processing aids, UV stabilizers, nucleating agents, fillers slip agents, fire retardants, plasticizers, stabilizers, smoke inhibitors, viscosity control agents, crosslinking agents, catalysts, boosters, anti-blocking agents, and combinations thereof. The high-density polyethylene composition may contain any amount of one or more additives. For example, the high-density polyethylene composition may compromise from less than about 10 percent by the combined weight of the additional additives, based on the weight of the high-density polyethylene composition. All individual values and subranges from less than about 10 weight percent are included herein and disclosed herein; for example, the high-density polyethylene composition may compromise from less than about 5 percent by the combined weight of the additional additives, based on the weight of the high-density polyethylene composition. The high-density polyethylene composition has any density; for example, the high-density polyethylene composition has a density in the range of 0.940 to 0.980 g/cm³. All individual values and subranges from 0.940 to 0.980 g/cm³ are included herein and disclosed herein; for example, density can be from a lower limit of 0.941 g/cm³, 0.943 g/cm³, 0.951 g/cm³, 0.953 g/cm³, 0.961 g/cm³, or 0.971 g/cm³ to an upper limit of 0.951 g/cm³, 0.953 g/cm³, 0.961 g/cm³, 0.963 g/cm³, or 0.973 g/cm³. For example, the high-density polyethylene composition may have a density in the range of 0.950 to 0.970 g/cm³, or in the alternative, the high-density polyethylene composition may have a density in the range of 0.950 to 0.965 g/cm³. The high-density polyethylene composition may have any melt index (I₂₁); for example, the high-density polyethylene composition may have a melt index (I₂) in the range of 0.5 to 1000 g/10 minutes. All individual values and subranges from 0.5 to 1000 g/10 minutes are included herein and disclosed herein; for example, the melt index (I₂) can be from a lower limit of 0.5 g/10 minutes, 1 g/10 minutes, or 5 g/10 minutes to an upper limit of 150 g/10 minutes, 200 g/10 minutes, 300 g/10 minutes, or 400 g/10 minutes. For example, the high-density polyethylene composition may have a melt index (I₂) in the range of 5 to 150 g/10 minutes; or in the alternative, the high-density polyethylene composition may have a melt index (I₂) in the range of 10 to 150 g/10 minutes. The high-density polyethylene composition may have any Yellowness Index according to ASTM D-6290; for example, the high-density polyethylene composition may have any Yellowness Index of less than about -2.5 at 0 hour of accelerated aging at 100 °C. according to ASTM D-6290; or in the alternative, the high-density polyethylene composition may have any Yellowness Index of less than about -2.5 at 10 hour of accelerated aging at 100 °C. according to ASTM D-6290; or in the alternative, the high-density polyethylene composition may have any Yellowness Index of less than about -2.5 at 20 hour of accelerated aging at 100 °C. according to ASTM D-6290; or in the alternative, the high-density polyethylene composition may have any Yellowness Index of less than about -2.5 at 30 hour of accelerated aging at 100 °C. according to ASTM D-6290; or in the alternative, the high-density polyethylene composition may have any Yellowness Index of less than about -2.5 at 10 hour of accelerated aging at 100 °C. according to ASTM D-6290; or in the alternative, the high-density polyethylene composition may have any Yellowness Index of less than or equal to (0.18X-4.94) between 0 hour of accelerated aging at 100 °C. and 2 hour of accelerated aging at 100 °C. according to ASTM D-6290, where X is the number or fraction of hours of accelerated aging at 100 °C.

Any conventional ethylene homopolymerization or copolymerization reactions employing different catalyst systems may be employed to produce the first component, that is the high-density polyethylene. Such conventional ethylene homopolymerization or copolymerization reactions include, but are not limited to, gas phase polymerization, slurry phase polymerization, liquid phase polymerization, and combinations thereof using conventional reactors, for example, gas phase reactors, loop reactors, stirred tank reactors, and batch reactors in series, or in parallel. The high-density polyethylene composition may preferably be produced via a gas phase polymerization or copolymerization, particularly those made using a titanated chromium catalyst, such as those described in EP0640625; however, the instant invention is not so limited.

Typical useful catalysts consists of a chromium (VI) compound (typically as the oxide) supported on a high surface area refractory oxide support. Generally the support is an amorphous microspheroidal silica, silica alumina, silica titania or aluminophosphate. The supports are typically produced by spray drying or precipitation. Supports prepared by spray drying typically have a narrower particle size distribution than the precipitated supports, however, either type of support may be subsequently sized using known techniques to further control the final support particle size. The catalyst is prepared by activating the chromium-containing support at temperatures of 400 to 1000 °C, in a dry, oxygen-containing atmosphere. Modifying materials such as titanium and fluoride are generally added prior to the activation.

Generally, catalysts are prepared by using commercially available silica to which a chrome source has been added. The silica substrate may be treated with a titanium ester, for example, titanium tetraisopropylate or titanium tetraethoxide, either after the Cr compound is deposited, or prior to this deposition. The support is generally pre-dried at about 150 to 200 °C. to remove physically adsorbed water. The titanate may be added as a solution to a slurry of the silica in isopentane solvent or directly into a fluidized bed of support. If added in slurry form, the slurry is dried. Generally, the Cr compound, which is convertible to Cr⁺⁶, has already been added to the support. The support is then converted into active catalyst by calcination in air at temperatures up to 1000 °C.

During activation, the titanium is converted to some type of surface oxide. The chromium compound (generally chromium (III) acetate) is converted to a Cr⁺⁶ oxide of some kind. Fluoriding agents may also be added during the activation process to selectively collapse some pores in the support, modifying the molecular weight response of the catalyst. The activated catalyst may also be treated with reducing agents prior to use, such as carbon monoxide in a fluidized bed, or other reducing agents, such as aluminum alkyls, boron alkyls, lithium alkyls.

Catalysts of this type are described in numerous patents, such as WO2004094489, EP0640625, US4100105. Catalyst such as those described in US6022933 also containing a Cr⁺⁶ component, are further useful in the instant invention.

It is noted that Ziegler type catalysts, which are typified by a transition metal halide supported on magnesium chloride, contain significant quantities of halogens, especially chlorides, which can increase resin color by causing, for example, mold staining and corrosion. In Ziegler type catalysts, the halogen species need to be sequestered or rendered inactive by various additives, such as calcium or zinc stearate, zinc oxide. These catalyst systems also contain significant amounts of organic species, which are bound to catalyst residues. Water is frequently added to the polymers, produced by Ziegler type catalyst systems, to react with the organic residues of the catalyst system and any reactive halogen containing compounds (that is free TiClₓ for example), and to allow these materials to be purged from the polymer, or react with other scavengers, prior to use. The addition of water to a Ziegler type catalyst system can produce acidic species, such as, hydrochloric acid, by hydrolysis of titanium chloride, which can further react in the resin, if not purged from the resin, or sequestered by reaction within the resin.

A specific feature of the chromium-based catalysts is that their residues (contained within the polymer) contain essentially no halogens, particularly no metal halides. Catalyst residues for chromium-based catalysts include the respective catalyst and corresponding catalyst decomposition products. For a chromium based catalyst system, catalyst residues are typically present in an amount from 2-10 ppm (total Cr and Ti, by weight). Other catalyst systems that contain essentially no metal halides are also useful in the invention. The catalyst residues are also essentially free of any HCl, which might react with moisture or oxygen.

The current invention has particular utility for reducing resin color when the polymerization or copolymerization catalyst contains chromium compounds, and particularly, both chromium and titanium compounds.

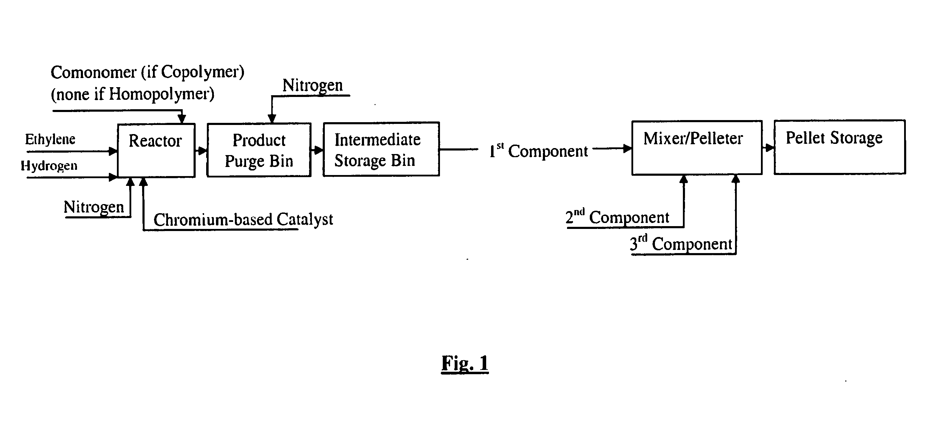

In production, referring to Fig. 1, chromium-based catalyst, ethylene, hydrogen, and optionally inert gases and/or liquids, for example, N₂, isopentane, hexane, are continuously fed into a reactor to facilitate the polymerization of ethylene polymer. The ethylene polymer is then transferred to a purge bin under inert atmosphere conditions, and subsequently, transferred into an intermediate storage bin. The ethylene polymer, that is the first component, is then transferred to an extruder to be pelletized. Second and third components are added to the extruder, and melt blended into the first component, that is the ethylene polymer, prior to pelletization. The third component is preferably in a liquid form. Such pelletization techniques are generally known. The instant high-density polyethylene composition may further be melt screened. Subsequent to the melting process in the extruder, the molten composition is passed through one or more active screens (positioned in series of more than one) with each active screen having a micron retention size of from 2 to 400 (2 to 4X10⁻⁵ m), and preferably 2 to 300 (2 to 3 X 10⁻⁵ m), and most preferably 2 to 70 (2 to 7X 10⁻⁶ m), at a mass flux of 5 to 100 lb/hr/in² (1.0 to about 20 kg/s/m²). Such further melt screening is disclosed in U.S. Patent No. 6,485,662.

In alternative production, referring to Fig. 1, chromium based catalyst, ethylene, optionally one or more alpha-olefin comonomers, hydrogen, and optionally inert gases and/or liquids, for example, N₂, isopentane, hexane, are continuously fed into a reactor to facilitate the polymerization ethylene in the presence of one or more alpha-olefin comonomers. The ethylene polymer is then transferred to a purge bin under inert atmosphere conditions, and subsequently, transferred into an intermediate storage bin. The ethylene polymer, that is first component, is then transferred to an extruder to be pelletized. Second and third components are added to the extruder and blended into the first component, that is the ethylene polymer, prior to pelletization. The third component is preferably in a liquid form. Such pelletization techniques are generally known. The instant high-density polyethylene composition may further be melt screened. Subsequent to the melting process in the extruder, the molten composition is passed through one or more active screens (positioned in series of more than one) with each active screen having a micron retention size of from 2 to 400 (2 to 4 X 10⁻⁵ m), and preferably 2 to 300 (2 to 3 X 10⁻⁵ m), and most preferably 2 to 70 (2 to 7 X 10⁻⁶ m), at a mass flux of 5 to 100 lb/hr/in² (1.0 to about 20 kg/s/m²). Such further melt screening is disclosed in U.S. Patent No. 6,485,662.

The second component may be added, and blended into the first component via any method. The second component is preferably added directly into (mixer or extruder) a mixer system, such as an extruder or pelleter, and blended into the first component. The second component may be added directly to the first component, for example, via an injection port along the extruder, and then blended into the first component. In the alternative, the second component may be added into the feed throat of the extruder with first component, and then blended into the first component.

The third component may be added and blended into the first component via any method. The third component is preferably added as a liquid directly to a mixer system, such as an extruder or pelleter, and blended into the first component. The third component may be added directly to the first component, for example, via an injection port along the extruder, and then blended into the first component. In the alternative, the third component may be added into the feed throat of the extruder with first component, and then blended into the first component.

The high-density polyethylene composition of the instant invention is preferably essentially free of any HCA (3-(3,5-di-tert-butyl-4-hydroxyphenyl) propanoic acid), which can create processing difficulties, such as, residual collection of this compound in mold vents, and which can negatively effect the properties of the final resin, such as taste and odor properties.

The high-density polyethylene composition of the instant invention may be used to make articles such as container devices, for example, dairy bottles, juice bottles, water bottles and beverage bottles.

Different techniques may be employed to make such container devices. Such techniques include, but are not limited to, injection blow molding, blow molding, coextrusion blow molding, injection molding, injection stretch blow molding, compression molding, extrusion, pultrusion, and calendering. Such techniques are generally well known. Preferred conversion techniques include injection blow molding, compression molding, and injection molding. Container devices including the high-density polyethylene composition of the instant invention exhibit improved clarity evidenced by a reduced Yellowness Index. Articles according to instant invention may have any Yellowness Index according to ASTM D-6290; for example, the articles according to instant invention may have any Yellowness Index of less than about -2.5 at 0 hour of accelerated aging at 100 °C. according to ASTM D-6290; or in the alternative, the articles according to instant invention may have any Yellowness Index of less than about -2.5 at 10 hour of accelerated aging at 100 °C. according to ASTM D-6290; or in the alternative, the articles according to instant invention may have any Yellowness Index of less than about -2.5 at 20 hour of accelerated aging at 100 °C. according to ASTM D-6290; or in the alternative, the articles according to instant invention may have any Yellowness Index of less than about -2.5 at 30 hour of accelerated aging at 100 °C. according to ASTM D-6290; or in the alternative, the articles according to instant invention may have any Yellowness Index of less than about -2.5 at 10 hour of accelerated aging at 100 °C. according to ASTM D-6290; or in the alternative, the articles according to instant invention may have any Yellowness Index of less than or equal to (0.18X-4.94) between 0 hour of accelerated aging at 100°C, and 2 hour of accelerated aging at 100 °C. according to ASTM D-6290, where X is the number or fraction of hours of accelerated aging at 100 °C, in oven.

### Test Methods

Test methods include the following:
Density was measured according to ASTM D-792-03, Method B, in isopropanol.
Melt index (I₂₁) was measured at 190°C. under a load of 21.6 kg according to ASTM D-1238-03 except that the samples were preheated for five minutes instead of seven minutes.
Yellowness Index was measured according to ASTM D-6290 using a BYK-Gardner Colorview instrument. A positive number refers to a resin measuring a higher yellowness, and a more negative number is indicative of a lower yellowness.

### Examples

The following examples illustrate exemplary embodiments of the present invention, but are not intended to limit the scope of the invention. The examples of the instant invention demonstrate that not only did the high-density polyethylene composition of the instant invention achieve a reduced Yellowness Index, but such reduced Yellowness Index was also maintained even after being subjected to accelerated aging.

### Example I

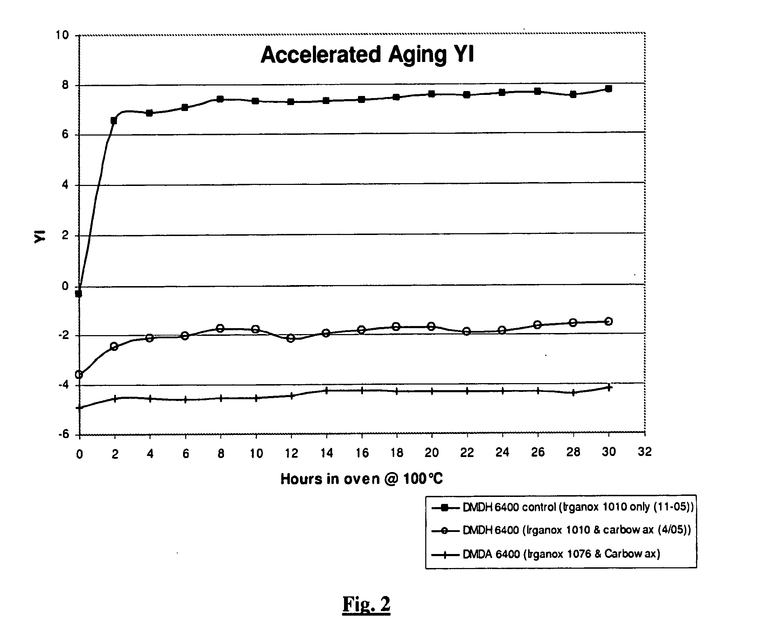

Example 1 was prepared according to the following procedure: a gas phase reactor was provided. Ethylene, hydrogen, chromium based catalyst, N₂, isopentane, and hexane were fed continuously into the reactor. The polymerization reaction was carried out in a gas phase reactor thereby producing the first component, that is a high-density polyethylene homopolymer, which is also commercially available under the tradename Unival™ DMDA-6400 NT 7 from The Dow™ Chemical Company, MI, USA, having a density of approximately 0.961 g/cm³, and a melt index (I₂) of approximately 0.8 g/ 10 minutes. The first component was continuously transferred to the purge bin under inert atmosphere conditions, and subsequently, transferred into the intermediate storage bin. The first component was then transferred to an extruder to be pelletized. Second and third components, that is Carbowax^{™} 400 and Irganox^{™} 1076 (liquid form), as shown in Table I, were added to the extruder via injection ports along the extruder, and were blended into the first component, that is the ethylene polymer, prior to pelletization. The polymer was extruded through a die plate, pelletized, and cooled. The resins of Examples I were tested for their properties, and such properties are shown in Tables II, and Fig. 2.

### Comparative Example A

Comparative Examples A was prepared according to the following procedure: a gas phase reactor was provided. Ethylene, hydrogen, chromium-based catalyst, N₂, isopentane, and hexane were fed continuously into reactor. The polymerization reaction was carried out in gas phase reactor thereby producing the first component, that is a high-density polyethylene homopolymer having a density of approximately 0.961 g/cm³, and a melt index (I₂) of approximately 0.8 g/ 10 minutes. The first component was continuously transferred to the purge bin under inert atmosphere conditions, and subsequently, transferred into the intermediate storage bin. The first component was then transferred to an extruder to be pelletized. Carbowax^{™} 400 and Irganox^{™} 1010, as shown in Table II, were added to the extruder via injection ports along the extruder, and were blended into the first component, that is the ethylene polymer, prior to pelletization. The polymer was extruded through a die plate, pelletized, and cooled. The resins of Comparative Example A were tested for their properties, and such properties are shown in Tables II, and Fig. 2.

### Comparative Example B

Comparative Examples B was prepared according to the following procedure: a gas phase reactor was provided. Ethylene, hydrogen, chromium based catalyst, N₂, isopentane, and hexane were fed continuously into the reactor. The polymerization reaction was carried out in a gas phase reactor thereby producing the first component, that is a high-density polyethylene homopolymer, which is also commercially available under the tradename Unival™ DMDH-6400 NT 7 from The Dow™ Chemical Company, MI, USA, having a density of approximately 0.961 g/cm³, and a melt index (I₂) of approximately 0.8 g/ 10 minutes. The first component was continuously transferred to the purge bin under inert atmosphere conditions, and subsequently, transferred into the intermediate storage bin. The first component was then transferred to an extruder to be pelletized. Irganox^{™} 1010, as shown in Table I, was added to the extruder via an injection port along the extruder, and were blended into the first component, that is the ethylene polymer, prior to pelletization. The polymer was extruded through a die plate, pelletized, and cooled. The resins of Comparative Examples B were tested for their properties, and such properties are shown in Tables II, and Fig. 2.

**Table I**

| | Example 1 | Comparative A | Comparative B |
|---|---|---|---|
| Carbowax^{™} 400 | 200 | 200 | 0 |
| (ppm) | | | |
| Irganox^{™} 1076 PPM | 650 | 0 | 0 |
| Irganox^{™} 1010 PPM | --- | 350 | 350 |

**Table II**

| | Example #1 | Comparative A | Comparative B |
|---|---|---|---|
| Yellowness Index @ 0 hr | -4.94 | -3.61 | -0.3 |
| Yellowness Index @ 10 hr | -4.55 | -1.79 | 7.3 |
| Yellowness Index @ 20 hr | -4.31 | -1.69 | 7.55 |
| Yellowness Index @ 30 hr | -4.19 | -1.55 | 7.72 |

## Claims

1. A high-density polyethylene composition comprising a melt-blended reaction product consisting of:
a first component, wherein said first component is a high-density polyethylene having a density in the range of 0.950 to 0.970 g/cm³ according to ASTM D-792-03, Method B;
a second component, wherein said second component is polyethylene glycol; and
a third component, wherein said third component is liquid octadecyl 3-(3,5-di-tert-butyl-4-hydroxyphenyl)propionate;
wherein said high-density polyethylene composition has a Yellowness Index of less than about -2.5 at 0 hour of accelerated aging at 100°C according to ASTM D-6290.

2. The high-density polyethylene composition according to Claim 1, wherein said composition has a Yellowness Index of less than about -2.5 at 10 hour of accelerated aging at 100°C according to ASTM D-6290.

3. The high-density polyethylene composition according to Claim 1, wherein said composition has a Yellowness Index of less than about -2.5 at 20 hour of accelerated aging at 100°C according to ASTM D-6290.

4. The high-density polyethylene composition according to Claim 1, wherein said composition has a Yellowness Index of less than about -2.5 at 30 hour of accelerated aging at 100°C according to ASTM D-6290.

5. The high-density polyethylene composition according to Claim 1, wherein the Yellowness Index between 0 hour of accelerated aging at 100°C and 2 hour of accelerated aging at 100°C is less than or equal to (0.18X-4.94) where X is the number or fraction of hours of accelerated aging at 100°C in oven according to ASTM D-6290.

6. The high-density polyethylene composition according to Claim 1, wherein said composition has a Yellowness Index in the range of -4 to -6 at 0 hour of accelerated aging at 100°C according to ASTM D-6290.

7. The high-density polyethylene composition according to Claim 1, wherein said composition comprises 150 to 200 parts of said second component per million parts of said first component.

8. The high-density polyethylene composition according to Claim 1, wherein said composition comprises about less than 1000 parts of said third component per million parts of said first component.

9. A process for making a high-density polyethylene composition, comprising the steps of:
providing a first component, wherein said first component is a high-density polyethylene having a density in the range of 0.950 to 0.970 g/cm³ according to ASTM D-792-03, Method B;
providing a second component, wherein said second component is polyethylene glycol; and
providing a third component, wherein said third component is liquid octadecyl-3-(3,5-di-tert-butyl-4-hydroxyphenyl)propionate;
blending said second and third components into said first component thereby forming a blend;
pelletizing said blend; and
thereby forming pellets of said high-density polyethylene composition;
wherein said high-density polyethylene composition has a Yellowness Index of less than about -2.5 at 0 hour of accelerated aging at 100°C according to ASTM D-6290.

10. A container device comprising:
a molded high-density polyethylene composition according to claim 1.

11. A method of making a container device, comprising the steps of:
providing a high-density polyethylene composition according to claim 1;
compression molding, injection molding or injection blow molding said high-density composition; and
thereby forming said container device.

## Patentansprüche

1. Zusammensetzung von Polyethylen hoher Dichte, umfassend ein Reaktionsprodukt aus einer Schmelzmischung, bestehend aus:
einer ersten Komponente, wobei die erste Komponente ein Polyethylen hoher Dichte mit einer Dichte im Bereich von 0,950 bis 0,970 g/cm³ gemäß ASTM D-792-03, Methode B, ist,
einer zweiten Komponente, wobei die zweite Komponente Polyethylenglykol ist, und
einer dritten Komponente, wobei die dritte Komponente flüssiges Octadecyl 3-(3,5-di-tert-butyl-4-hydroxyphenyl)propionat ist,
wobei die Zusammensetzung von Polyethylen hoher Dichte einen Vergilbungsindex von weniger als etwa -2,5 bei 0 Stunden beschleunigter Alterung bei 100°C gemäß ASTM D-6290 aufweist.

2. Zusammensetzung von Polyethylen hoher Dichte gemäß Anspruch 1, wobei die Zusammensetzung einen Vergilbungsindex von weniger als etwa -2,5 bei 10 Stunden beschleunigter Alterung bei 100°C gemäß ASTM D-6290 aufweist.

3. Zusammensetzung von Polyethylen hoher Dichte gemäß Anspruch 1, wobei die Zusammensetzung einen Vergilbungsindex von weniger als etwa -2,5 bei 20 Stunden beschleunigter Alterung bei 100°C gemäß ASTM D-6290 aufweist.

4. Zusammensetzung von Polyethylen hoher Dichte gemäß Anspruch 1, wobei die Zusammensetzung einen Vergilbungsindex von weniger als etwa -2,5 bei 30 Stunden beschleunigter Alterung bei 100°C gemäß ASTM D-6290 aufweist.

5. Zusammensetzung von Polyethylen hoher Dichte gemäß Anspruch 1, wobei der Vergilbungsindex zwischen 0 Stunden beschleunigter Alterung bei 100°C und 2 Stunden beschleunigter Alterung bei 100°C weniger oder gleich (0,18X-4,94) ist, wobei X die Zahl oder die Fraktion an Stunden beschleunigter Alterung bei 100°C in einem Ofen gemäß ASTM D-6290 ist.

6. Zusammensetzung von Polyethylen hoher Dichte gemäß Anspruch 1, wobei die Zusammensetzung einen Vergilbungsindex im Bereich von -4 bis -6 bei 0 Stunden beschleunigter Alterung bei 100°C gemäß ASTM D-6290 aufweist.

7. Zusammensetzung von Polyethylen hoher Dichte gemäß Anspruch 1, wobei die Zusammensetzung 150 bis 200 Teile der zweiten Komponente pro Million Teile der ersten Komponente umfasst.

8. Zusammensetzung von Polyethylen hoher Dichte gemäß Anspruch 1, wobei die Zusammensetzung etwa weniger als 1000 Teile der dritten Komponente pro Million Teile der ersten Komponente umfasst.

9. Verfahren zur Herstellung einer Zusammensetzung von Polyethylen hoher Dichte, umfassend die Schritte:
Bereitstellen einer ersten Komponente, wobei die erste Komponente ein Polyethylen hoher Dichte mit einer Dichte im Bereich von 0,950 bis 0,970 g/cm³ gemäß ASTM D-792-03, Methode B, ist;
Bereitstellen einer zweiten Komponente, wobei die zweite Komponente Polyethylenglykol ist, und
Bereitstellen einer dritten Komponente, wobei die dritte Komponente flüssiges Octadecyl-3-(3,5-di-tert-butyl-4-hydroxyphenyl)propionat ist,
Mischen der zweiten und dritten Komponenten in die erste Komponente, wobei eine Mischung gebildet wird;
Pelletieren dieser Mischung; und
Formen von Pellets der Zusammensetzung von Polyethylen hoher Dichte dabei; wobei die Zusammensetzung von Polyethylen hoher Dichte einen Vergilbungsindex von weniger als etwa -2,5 bei 0 Stunden beschleunigter Alterung bei 100°C gemäß ASTM D-6290 aufweist.

10. Behälter-Vorrichtung umfassend:
eine geformte Zusammensetzung von Polyethylen hoher Dichte gemäß Anspruch 1.

11. Verfahren zur Herstellung einer Behältervorrichtung, umfassend die Schritte:
Bereitstellen einer Zusammensetzung von Polyethylen hoher Dichte gemäß Anspruch 1;
Formpressen, Spritzgießen oder Spritzblasformen der Zusammensetzung von Polyethylen hoher Dichte; und
Formen einer Behältervorrichtung dabei.

## Revendications

1. Composition de polyéthylène haute densité, comprenant un produit de réaction et de mélange à l'état fondu, constituée :
- d'un premier composant, qui est un polyéthylène haute densité dont la masse volumique, mesurée selon le procédé B de la norme ASTM D-792-03, vaut de 0,950 à 0,970 g/cm³ ;
- d'un deuxième composant, qui est un polyéthylèneglycol ;
- et d'un troisième composant, qui est du 3-(3,5-ditertiobutyl-4-hydroxy-phényl)-propionate d'octadécyle à l'état liquide ;
laquelle composition de polyéthylène haute densité présente, à un instant correspondant à 0 heure de vieillissement accéléré à 100 °C, un indice de jaunissement, mesuré selon la norme ASTM D-6290, inférieur à environ -2,5.

2. Composition de polyéthylène haute densité, conforme à la revendication 1, laquelle composition présente, à un instant correspondant à 10 heures de vieillissement accéléré à 100 °C, un indice de jaunissement, mesuré selon la norme ASTM D-6290, inférieur à environ -2,5.

3. Composition de polyéthylène haute densité, conforme à la revendication 1, laquelle composition présente, à un instant correspondant à 20 heures de vieillissement accéléré à 100 °C, un indice de jaunissement, mesuré selon la norme ASTM D-6290, inférieur à environ -2,5.

4. Composition de polyéthylène haute densité, conforme à la revendication 1, laquelle composition présente, à un instant correspondant à 30 heures de vieillissement accéléré à 100 °C, un indice de jaunissement, mesuré selon la norme ASTM D-6290, inférieur à environ -2,5.

5. Composition de polyéthylène haute densité, conforme à la revendication 1, dont l'indice de jaunissement mesuré selon la norme ASTM D-6290, entre des instants correspondant à 0 heure de vieillissement accéléré à 100 °C et à 2 heures de vieillissement accéléré à 100 °C, est inférieur ou égal à la valeur de l'expression 0,18X - 4,94, où X représente le nombre, entier ou fractionnaire, d'heures de vieillissement accéléré à 100 °C dans un four.

6. Composition de polyéthylène haute densité, conforme à la revendication 1, laquelle composition présente, à un instant correspondant à 0 heure de vieillissement accéléré à 100 °C, un indice de jaunissement, mesuré selon la norme ASTM D-6290, situé dans l'intervalle allant de -4 à -6.

7. Composition de polyéthylène haute densité, conforme à la revendication 1, laquelle composition comprend de 150 à 200 parties dudit deuxième composant par million de parties dudit premier composant.

8. Composition de polyéthylène haute densité, conforme à la revendication 1, laquelle composition comprend moins d'environ 1000 parties dudit troisième composant par million de parties dudit premier composant.

9. Procédé de fabrication d'une composition de polyéthylène haute densité, lequel procédé comporte les étapes suivantes :
- prendre un premier composant, qui est un polyéthylène haute densité dont la masse volumique, mesurée selon le procédé B de la norme ASTM D-792-03, vaut de 0,950 à 0,970 g/cm³ ;
- prendre un deuxième composant, qui est un polyéthylèneglycol ;
- prendre un troisième composant, qui est du 3-(3,5-ditertiobutyl-4-hydroxy-phényl)-propionate d'octadécyle à l'état liquide ;
- incorporer lesdits deuxième et troisième composants dans ledit premier composant, ce qui donne un mélange ;
- et mettre ce mélange sous forme de pastilles, ce qui donne des pastilles de ladite composition de polyéthylène haute densité ;
laquelle composition de polyéthylène haute densité présente, à un instant correspondant à 0 heure de vieillissement accéléré à 100 °C, un indice de jaunissement, mesuré selon la norme ASTM D-6290, inférieur à environ -2,5.

10. Article de type récipient, comprenant un article moulé en une composition de polyéthylène haute densité conforme à la revendication 1.

11. Procédé de fabrication d'un article de type récipient, comprenant les étapes suivantes :
- prendre une composition de polyéthylène haute densité conforme à la revendication 1 ;
- et mouler cette composition de polyéthylène haute densité, par compression, par injection ou par injection-soufflage ;
ce qui donne ledit article de type récipient.
